# EUROPÄISCHE PATENTANMELDUNG

(11) **EP 1 437 900 A1**
(43) Veröffentlichungstag der Anmeldung: **14.07.2004**
(21) Anmeldenummer: 03000749.6
(22) Anmeldetag: 13.01.2003
(51) Int. Cl.: H04Q 7/22, H04Q 7/38

(54) **Steuerung des Konfigurationszustands eines Mobilfunkgerätes für einen Multicast-Service**

(71) Anmelder: SIEMENS AKTIENGESELLSCHAFT, 80333 München (DE)
(72) Erfinder: Kroth, Norbert, 14471 Postdam (DE); Schniedenharn Jörg, 13587 Berlin (DE); Vesely Alexander, 1170 Wien (AT)

(57) **Zusammenfassung**

Verfahren zur Organisation der Luftschnittstelle durch eine Einrichtung zur Funkzugangskontrolle.

Die Erfindung betrifft ein Verfahren zur Einstellung des von einer Teilnehmerstation nach Empfang einer Multicast-Nutzinformation einzunehmenden Konfigurationszustandes in einem Funkkommunikationssystem mit Teilnehmerstationen und mindestens einer Einrichtung zur Funkzugangskontrolle zwischen mindestens einer Basisstation und Teilnehmerstationen über eine Luftschnittstelle, wobei Multicast-Nutzinformationen (MULTICAST INFO) als Dienst einer Gruppe von Teilnehmerstationen über Funk zur Verfügung gestellt werden, und wobei für mindestens eine Teilnehmerstation der Gruppe mindestens zwei verschiedene Konfigurationszustände (IDLE,CONNECTED) zugänglich sind. Erfindungsgemäß entscheidet die Einrichtung zur Funkzugangskontrolle aufgrund von einem oder mehreren Parametern über die Art des nach dem Empfang der Multicast-Nutzinformationen (MULTICAST INFO) von der mindestens einen Teilnehmerstation einzunehmenden Konfigurationszustandes (IDLE,CONNECTED) und teilt diese Entscheidung der mindestens einen Teilnehmesstation mit. Die Teilnehmesstation nimmt anschließend den entsprechendes Zustand ein. Ferner betrifft die Erfindung eine Einrichtung zur Funkzugangskontrolle zur Durchführung des Verfahrens.

## Beschreibung

Die Erfindung betrifft ein Verfahren Organisation der Luftschnittstelle in einem Funkkommunikationssystem nach dem Oberbegriff des Anspruchs 1.

Die Erfindung betrifft ferner eine Einrichtung zur Funkzugangskontrolle zwischen mindestens einer Basisstation und Teilnehmerstationen über eine Luftschnittstelle in einem Funkkommunikationssystem nach dem Oberbegriff des Anspruchs 7.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Luftschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen (SMS), sowie digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem einer flexiblen Verwaltung der Kapazität der Luftschnittstelle, die bei Funkkommunikationssystemen die Schnittstelle mit den geringsten Ressourcen ist. Bei diesen Funkkommunikationssystemen soll es vor allem durch die flexible Verwaltung der Luftschnittstelle möglich sein, dass eine Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Die Verbindung zwischen einer Basisstation und einer Teilnehmerstation erfolgt über eine Luftschnittstelle. Die Basisstation kann dabei mehrere Funkzellen bedienen.

Üblicherweise sind mindestens eine Basisstation und eine Einrichtung zur Funkzugangskontrolle (RNC, Radio Network Controler) Bestandteile eines Basisstationssubsystems (RNS, Radio Network Subsystem). Ein Funkkommunikationssystem umfasst in der Regel mehrere Basisstationssubsysteme, die an ein Kernnetz (CN, Core Network) angeschlossen sind. Dabei ist die Einrichtung zur Funkzugangskontrolle des Basisstationssubsystems mit einer Zugangseinrichtung des Kernnetzes verbunden.

Für die Adressierung von Teilnehmerstationen in Funkkommunikationssystemen sind verschiedene Verfahren bekannt. Neben dem Einzelsenderuf (Unicast), bei dem genau eine Teilnehmerstation adressiert wird, ist der Rundsenderuf (Broadcast), bei dem alle Teilnehmerstationen in Funkreichweite der sendenden Basisstation adressiert werden, am häufigsten vertreten. Weiterhin existiert der Gruppensenderuf (Multicast), bei dem die Teilnehmerstationen einer Multicast-Gruppe gleichzeitig mit dem Aussenden einer Multicast-Information adressiert werden. Ein Multicast, bei dem alle Funkstationen in der Reichweite einer Basisstation adressiert werden, entspricht einem Broadcast.

Neben individuellen Nutzinformationen werden in Funkkommunikationssystemen somit Daten übertragen, die mehreren Benutzern zur Verfügung gestellt werden. Beispielsweise umfassen solche Nutzinformationen Video streams oder andere Broadcast- und/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst. Unterschiedliche MBMS-Dienste (Multimedia Broadcast/Multicast Service) werden vom Kernnetz in der Regel als separate Datenströme bereitgestellt.

Für die Teilnehmerstationen innerhalb der Funkkommunikationssysteme sind in der Regel mehrere Konfigurationszustände zugänglich. Im UMTS handelt es sich hierbei z.B. um einen Leerlaufmodus (Idle Mode), sowie um einen Verbindungsmodus, welcher sich aufteilt in die Zustände CELL_DCH, CELL_FACH, CELL_PCH und URA_PCH.

Der Erfindung liegt die Aufgabe zugrunde, ein Verfahren und eine Einrichtung zur Funkzugangskontrolle der eingangs genannten Art aufzuzeigen, welche zur effizienten Organisation der Luftschnittstelle in einem Funkkommunikationssystem mit gruppenspezifischen Diensten beiträgt.

Diese Aufgabe wird für das Verfahren durch ein Verfahren mit den Merkmalen des Anspruchs 1 und für die Einrichtung zur Funkzugangskontrolle durch eine Einrichtung mit den Merkmalen des Anspruchs 7 gelöst.

Vorteilhafte Ausgestaltungen und Weiterbildungen sind Gegenstand der abhängigen Ansprüche.

In dem Funkkommunikationssystem werden Nutzinformationen als Dienst einer Gruppe von Teilnehmerstationen über Funk zur Verfügung gestellt. Für mindestens eine Teilnehmerstation der Gruppe sind mindestens zwei verschiedene Konfigurationszustände zugänglich. Erfindungsgemäß entscheidet die Einrichtung zur Funkzugangskontrolle aufgrund von einem oder mehreren Parametern über die Art des nach dem Empfang der Nutzinformationen von der mindestens einen Teilnehmerstation einzunehmenden Konfigurationszustandes.

Eine Gruppe besteht hierbei aus mindestens einer Teilnehmerstation, in der Regel jedoch aus einer Viel- bzw. Mehrzahl von Teilnehmerstationen. Die maximale Anzahl an Teilnehmerstationen innerhalb der Gruppe entspricht der Anzahl der Teilnehmerstationen des Funkkommunikationssystems. Das Funkkommunikationssystem kann also Teilnehmerstationen der Gruppe und weitere Teilnehmerstationen, welche z.B. anderen Gruppen angehören können, umfassen, oder auch ausschließlich solche Teilnehmerstationen, welche der Gruppe angehören. Die Erfindung ist somit auf Broadcast- und auf Multicast-Dienste anwendbar.

Die Entscheidung über die Art des einzunehmenden Konfigurationszustandes betrifft mindestens eine Teilnehmerstation der Gruppe. Sie kann jede Anzahl von Gruppenmitgliedern bis hin zur Gesamtzahl der Teilnehmerstationen der Gruppe betreffen. Für verschiedene Gruppenmitglieder können hierbei auch Entscheidungen mit verschiedenen Ergebnissen getroffen werden. Es ist möglich, dass die Teilnehmerstationen, welche einer solchen Entscheidung unterliegen, durch eine Bedingung oder einen gemeinsamen Parameter, wie z.B. eine regionale Beschränkung oder einen Vertrag mit dem Betreiber des Funkkommunikationssystems, bestimmt sind.

Bei den zugänglichen Konfigurationszuständen kann es sich z.B. um zu beobachtende physikalische Kanäle oder auch Betriebszustände einer Teilnehmerstation handeln.

In einer Ausgestaltung der Erfindung handelt es bei dem einen Parameter oder bei mindestens einem der Parameter um einen Parameter des Dienstes. Es kann also einzig aufgrund eines oder mehrerer Parameter eines Broadcast- oder Multicast-Dienstes entschieden werden, oder auch aufgrund einer Kombination von einem oder mehrerer Parameter des betreffenden Dienstes mit anderen Parametern wie z.B. der Verkehrsauslastung.

Vorzugsweise handelt es sich bei dem einen Parameter oder bei dem mindestens einen der Parameter des Dienstes um eine Dienstpriorität oder um eine Wiederholfrequenz zur Aussendung des Dienstes, wie z.B. eine Aussendung von Nutzinformation in Zeitabständen von 5 Minuten oder eine Häufigkeit der Übertragung des Dienstes, oder um eine Länge von Nutzinformationen des Dienstes, wie z.B. eine durchschnittliche Länge der Übertragung des Dienstes, oder um eine Anzahl von Nutzinformationen, wie z.B. eine Anzahl von Datenpaketen, welche im Rahmen des Dienstes verschickt werden, oder um Informationen über die Behandlung des Dienstes durch andere Einrichtungen zur Funkzugangskontrolle, wie z.B. ob ein anderes Funkkommunikationssystem mit lokaler Überschneidung den betreffenden Dienst aktuell auch anbietet, oder um Kosteninformation. Bezüglich der Kosteninformation könnte z.B. von der Einrichtung zur Funkzugangskontrolle entschieden werden, dass für teure Dienste die für diesen Dienst subskribierten Teilnehmerstationen in einem für das Funkkommunikationssystem relativ aufwendigen Konfigurationszustand gehalten werden. Entsprechendes gilt auch für einen Dienst mit einer hohen Dienstpriorität. Der Einrichtung zur Funkzugangskontrolle kann somit eine Liste von Parametern des Dienstes, wie z.B. ein Verkehrsprofil eines Multicast- oder eines Broadcast-Dienstes zur Verfügung stehen. Die Listeneinträge sind dann jeweils für sich genommen oder in Kombination miteinander oder mit anderen Parametern Grundlage für die Entscheidung über den Konfigurationszustand einer oder mehrerer Teilnehmerstationen.

Gemäß einer Ausgestaltung der Erfindung handelt es sich bei mindestens einem der Parameter um eine Eigenschaft der mindestens einen Teilnehmerstation. Dies könnte z.B. eine Priorisierung der Teilnehmerstation innerhalb des Funkkommunikationssystems oder Informationen über den Batterie- bzw. Akkuzustand der Teilnehmerstation sein.

Mit Vorteil kann es sich bei den zugänglichen Konfigurationszuständen um einen Verbindungsmodus und einen Leerlaufmodus handeln. Ein Verbindungsmodus zeichnet sich dadurch aus, dass in diesem Konfigurationszustand eine Signalisierungsverbindung zwischen der Teilnehmerstation und dem Funknetz aufrecht erhalten wird und der Teilnehmerstation eine Funknetzwerkidentifikation zugewiesen wurde. Im Leerlaufmodus hingegen ist die Teilnehmerstation der Einrichtung zur Funkzugangskontrolle nicht bekannt.

In einer Weiterbildung der Erfindung wurde der Einrichtung zur Funkzugangskontrolle mindestens einer der Parameter von einem mit der Einrichtung zur Funkzugangskontrolle verbundenen Kernnetz oder von einer Einrichtung zur Überwachung und Wartung des Funkkommunikationssystems übermittelt.

Erfindungsgemäß weist die Einrichtung zur Funkzugangskontrolle Mittel zur Entscheidung aufgrund von einem oder mehreren Parametern über die Art des nach dem Empfang der Nutzinformationen von der mindestens einen Teilnehmerstation einzunehmenden Konfigurationsszustandes auf. Mittel und Vorrichtungen zur Durchführung des Verfahrens können vorgesehen sein.

Die Erfindung wird im folgenden anhand eines Ausführungsbeispiels erläutert. Dabei zeigen
- Figur 1:: einen Ausschnitt aus einem Funkkommunikationssystem,
- Figur 2:: ein Ablaufdiagramm eines erfindungsgemäßen Verfahrens.

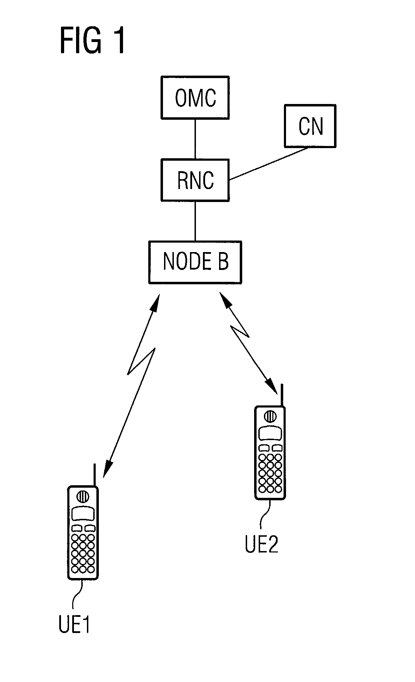

Das Ausführungsbeispiel bezieht sich auf ein Funkkommunikationssystem nach dem UMTS Standard. Figur 1 zeigt einen Ausschnitt aus einem solchen Funkkommunikationssystem der dritten Generation. Dieses umfasst eine Einrichtung RNC zur Funkzugangskontrolle, welche mit einer Basisstation NODE B und einem Kernnetz CN verbunden ist. Die Aufgabe der Einrichtung RNC zur Funkzugangskontrolle besteht in der Steuerung und Überwachung der ihr angeschlossenen Basisstationen mit ihren jeweiligen Funkzellen. Die Basisstation NODE B bedient eine solche Funkzelle, in der sich die Teilnehmerstationen UE1 und UE2 befinden. Weiterhin ist die Einrichtung RNC zur Funkzugangskontrolle mit einer Einrichtung OMC zur Überwachung, Steuerung und Wartung des Funknetzes verbunden.

Die Teilnehmer zu den jeweiligen Teilnehmerstationen UE1 und UE2 wurden für einen Multicast-Dienst subskribiert. Somit bilden die Teilnehmerstationen UE1 und U2 eine Gruppe. Weitere Teilnehmerstationen außerhalb der durch die Subskription der Teilnehmer definierten Gruppe können sich in der Funkzelle der Basisstation aufhalten, welche für die Erläuterung des erfindungsgemäßen Verfahrens jedoch nicht bedeutsam sind.

Es werden von der Basisstation NODE B Nutzinformationen wie z.B. Börseninformationen oder Videos gesendet, welche die Teilnehmerstationen UE1 und UE2 der Gruppe empfangen und entschlüsseln können. Teilnehmerstationen außer den Teilnehmerstationen UE1 und UE2 der Gruppe können diese Multicast-Informationen nicht entschlüsseln.

Nach dem Einschalten einer Teilnehmerstation in dem Funkkommunikationssystem befindet sich diese in einem Leerlaufmodus (Idle Mode). Dieser Modus zeichnet sich dadurch aus, dass diese Teilnehmerstation zwar in dem Kernnetz CN, nicht aber in dem Funkzugangsnetz (Radio Access Network, RAN) des Funkkommunikationssystems durch eine Identifikationsinformation bekannt ist. Einer Einrichtung RNC zur Funkzugangskontrolle bleibt es somit verborgen, welche Teilnehmerstationen im Leerlaufmodus sich in den Funkzellen der ihr angeschlossenen Basisstationen befinden. Eine Teilnehmerstation im Leerlaufmodus tauscht mit dem Funknetz keine Informationen aus, bis eine Verbindungsanfrage durch die Teilnehmerstation gestellt wird. Nach einer solchen Verbindungsanfrage wechselt die Teilnehmerstation in den Verbindungsmodus. Eine Verbindungsanfrage kann z.B. durch die Nachfrage der Teilnehmerstation nach einem Dienst oder auch durch eine Paging-Anfrage des Funknetzes initiiert werden.

Die Teilnehmerstationen des Funkkommunikationssystems, welche sich in einem Verbindungsmodus befinden, sind der jeweiligen Einrichtung zur Funkzugangskontrolle aufgrund einer Identifikationsinformation bekannt und somit lokalisierbar. Die entsprechende Identifikationsinformation wurde der Einrichtung zur Funkzugangskontrolle von der Teilnehmerstation übermittelt. Auch das Kernnetz kann der Einrichtung zur Funkzugangskontrolle Informationen über die jeweilige Teilnehmerstation übermitteln. Während der Verbindungsmodus aktiv ist, überwachen die jeweiligen Teilnehmerstationen andere Funkkanäle als die Teilnehmerstationen, welche sich aktuell im Leerlaufmodus befinden. Eine Teilnehmerstationen kann sich auch dann in einem Verbindungsmodus befinden, wenn dieser aktuell kein physikalischer Kanal zugewiesen ist.

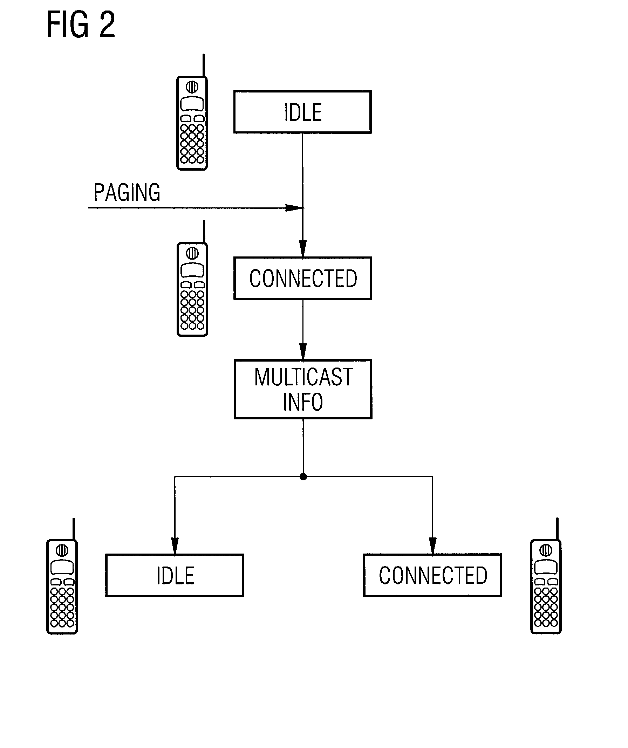

Im Ablaufdiagramm der Figur 2 befindet sich die Teilnehmerstation zu Beginn im Leerlaufmodus IDLE. In diesem Modus kann die Teilnehmerstation keine Nutzinformation des Multicast-Dienstes empfangen. Um diese für den Empfang der Nutzinformation des Multicast-Dienstes konfigurieren zu können, ist es notwendig, sie vor der Übertragung der Nutzinformation zu benachrichtigen. Diese Benachrichtigung erfolgt mittels eines Paging-Kanals, welchen die für den Multicast-Dienst subskribierten Teilnehmerstationen beobachten. Bei dieser Benachrichtigung handelt es sich um gruppenspezifische Informationen, welche ausschließlich an die Teilnehmerstationen UE1 und UE2 der Gruppe adressiert sind. Die Teilnehmerstation der Figur 2 entnimmt dem Signal PAGING die für den Empfang und die Verarbeitung der Nutzinformation des Multicast-Dienstes notwenigen Informationen.

Daraufhin wechselt die Teilnehmerstation durch geeigneten Signalisierungsaustausch mit der Basisstation in den Verbindungsmodus CONNECTED. In diesem Konfigurationszustand empfängt die Teilnehmerstation die Nutzinformation MULTICAST INFO des Multicast-Dienstes.

Nach dem Empfang der Nutzinformation MULTICAST INFO des Multicast-Dienstes kann die Teilnehmerstation entweder in dem Verbindungsmodus CONNECTED verbleiben oder in den Leerlaufmodus IDLE wechseln. In letzterem Fall wird aufgrund der nächsten Paging-Nachricht, welche Nutzinformation des Multicast-Dienstes ankündigt, ein erneuter Wechsel in den Verbindungsmodus CONNECTED initiiert.

Erfindungsgemäß entscheidet die Einrichtung zur Funkzugangskontrolle darüber, ob die Teilnehmerstation nach dem Empfang der Nutzinformation MULTICAST INFO des Multicast-Dienstes in den Leerlaufmodus IDLE wechselt oder im Verbindungsmodus CONNECTED verbleibt. Diese Entscheidung trifft die Einrichtung zur Funkzugangskontrolle unter Zuhilfenahme eines Verkehrsprofils des Multicast-Dienstes, welches der Einrichtung zur Funkzugangskontrolle vom Kernnetz nach der Aktivierung des Dienstes zur Verfügung gestellt wurde. Alternativ könnte das Verkehrsprofil auch bei der Bereitstellung des Multicast-Dienstes der Einrichtung zur Funkzugangskontrolle per Konfiguration mitgeteilt worden sein.

Somit ist die Einrichtung zur Funkzugangskontrolle aufgrund des vorliegenden Verkehrsprofils und der aktuellen Lastsituation in dem von ihr verwalteten Funkabdeckungsbereich in der Lage, zu entscheiden, welchen Konfigurationszustand die Teilnehmerstationen der Multicast-Gruppe zwischen den einzelnen Multicast-Informationen einnehmen sollen. Diese Entscheidung kann den Teilnehmerstationen in der Paging-Nachricht oder in der Nachricht des Multicast-Dienstes oder in einer separaten Signalisierungsnachricht, welche bereits vor oder auch nach der Nachricht des Multicast-Dienstes übermittelt werden kann, mitgeteilt werden.

Die Entscheidung über den zwischen den einzelnen Nutzinformationen des Multicast-Dienstes einzunehmenden Konfigurationszustand kann sowohl für die Gesamtheit der Teilnehmerstationen der Gruppe getroffen werden, als auch für eine oder mehrere Teilnehmerstationen unabhängig von den restlichen Teilnehmerstationen der Gruppe. In die Entscheidung kann auch eine Kombination von Parametern des Verkehrsprofils des Multicast-Dienstes mit teilnehmerspezifischen Parametern einfließen. So könnte z.B. bezüglich einer hoch priorisierten Teilnehmerstation die Entscheidung gefällt werden, dass diese im Verbindungsmodus verbleibt, während andere Teilnehmerstationen einen Wechsel in den Leerlaufmodus vollziehen.

Aufgrund des Austausches von Signalisierungsinformation zwischen einer Teilnehmerstation im Verbindungsmodus und der jeweiligen Basisstation bedeutet das Verbleiben einer Teilnehmerstation im Verbindungsmodus eine gesteigerte Auslastung des Funkkommunikationssystems. Andererseits bietet der Verbindungsmodus die Möglichkeit, dass zwischen dem Empfang der Paging-Nachricht und der Nutinformation des Multicast-Dienstes keine Zeit für einen Wechsel des Konfigurationszustandes benötigt wird, so dass Echtzeitdaten ohne Verzögerung übertragen werden können. Ein weiterer Vorteil des Verbleibens im Verbindungsmodus besteht darin, dass dem Funknetz in diesem Fall der Aufenthaltsort der Teilnehmerstation bekannt ist. Diese Kenntnis ist dann von Relevanz, wenn die Nutzinformation des Multicast-Dienstes ausschließlich in den Funkzellen ausgestrahlt werden soll, in welchen sich Teilnehmerstationen der Multicast-Gruppe befinden.

Die Entscheidung der Einrichtung zur Funkzugangskontrolle besteht somit aus einer Abwägung einer Reihe von Einflussfaktoren. Im folgenden wird ein konkretes Beispiel für eine solche Entscheidung betrachtet: Der Inhalt des Multicast-Dienstes bestehe aus Informationen zu Unterhaltungsangeboten wie z.B. Kinoprogrammen; die Einrichtung zur Funkzugangskontrolle sei aufgrund einer Vielzahl von Teilnehmerstationen im Funkkommunikationssystem stark ausgelastet; dem Multicast-Dienst wird in dem Verkehrsprofil eine niedrige Priorität zugeordnet; der Multicast-Dienst wird mit einer Wiederholungsfrequenz von 30 Minuten ausgestrahlt. In diesem Fall entscheidet die Einrichtung zur Funkzugangskontrolle z.B., die Teilnehmerstationen in den Leerlaufmodus wechseln zu lassen.

Anders würde beispielsweise die Entscheidung der Einrichtung zur Funkzugangskontrolle ausfallen, wenn der Inhalt des Multicast-Dienstes aus Informationen über die Verkehrssituation wie z.B. Staumeldungen bestünde, aktuell nur ein kleiner Teil der Kapazität der Einrichtung zur Funkzugangskontrolle genutzt würde, dem Multicast-Dienst in dem Verkehrsprofil eine hohe Priorität zugeordnet wäre und die Nutzinformation des Multicast-Dienstes in Zeitabständen von 5 Minuten übertragen werden sollten. In diesem Fall wäre ein Verbleiben von zumindest einigen Gruppenteilnehmern der Multicast-Gruppe im Verbindungsmodus vorzuziehen.

Ist der Einrichtung zur Funkzugangskontrolle aufgrund des Verkehrsprofils des Multicast-Dienstes bekannt, dass der Dienst sehr häufig ausgestrahlt wird, so kann z.B. die Entscheidung getroffen werden, alle Teilnehmerstationen der Multicast-Gruppe im Verbindungsmodus zu halten. Diese Entscheidung kann den betreffenden Teilnehmerstationen direkt nach der Subskription des Dienstes mitgeteilt werden. Die Entscheidung muss in diesem Fall nicht nach jedem Aussenden des Dienstes erneut getroffen werden, sie ist für die Dauer der Ausstrahlung des Dienstes gültig. Da sich im beschriebenen Fall alle Teilnehmerstationen der Multicast-Gruppe im Verbindungsmodus befinden, kann auf das Aussenden einer Paging-Nachricht verzichtet werden. Der Einrichtung zur Funkzugangskontrolle ist aufgrund des Verbindungsmodus bekannt, ob sich in dem von ihr kontrollierten Bereich Teilnehmerstationen der Multicast-Gruppe aufhalten.

## Patentansprüche

1. Verfahren zur Organisation der Luftschnittstelle in einem Funkkommunikationssystem mit Teilnehmerstationen (UE1, UE2) und mindestens einer Einrichtung (RNC) zur Funkzugangskontrolle zwischen mindestens einer Basisstation (NODE B) und Teilnehmerstationen (UE1, UE2) über eine Luftschnittstelle,
wobei Nutzinformationen (MULTICAST INFO) als Dienst einer Gruppe von Teilnehmerstationen (UE1, UE2) über Funk zur Verfügung gestellt werden,
wobei für mindestens eine Teilnehmerstation (UE1, UE2) der Gruppe mindestens zwei verschiedene Konfigurationszustände (IDLE, CONNECTED) zugänglich sind, **dadurch gekennzeichnet,**
**dass** die Einrichtung (RNC) zur Funkzugangskontrolle aufgrund von einem oder mehreren Parametern entscheidet über die Art des nach dem Empfang der Nutzinformationen (MULTICAST INFO) von der mindestens einen Teilnehmerstation (UE1, UE2) einzunehmenden Konfigurationszustandes (IDLE, CONNECTED).

2. Verfahren nach Anspruch 1, **dadurch gekennzeichnet,**
**dass** es sich bei dem einen Parameter oder bei mindestens einem der Parameter um einen Parameter des Dienstes handelt.

3. Verfahren nach Anspruch 2, **dadurch gekennzeichnet,**
**dass** es sich bei dem einen Parameter oder bei dem mindestens einen der Parameter um eine Dienstpriorität oder um eine Wiederholfrequenz zur Aussendung des Dienstes oder um eine Länge von Nutzinformationen (MULTICAST INFO) des Dienstes oder um eine Anzahl von Nutzinformationen (MULTICAST INFO) oder um Information über die Behandlung des Dienstes durch andere Einrichtungen zur Funkzugangskontrolle oder um Kosteninformation handelt.

4. Verfahren nach einem der Ansprüche 1 bis 3, **dadurch gekennzeichnet,**
**dass** es sich bei mindestens einem der Parameter um eine Eigenschaft der mindestens einen Teilnehmerstation (UE1, UE2) handelt.

5. Verfahren nach einem der Ansprüche 1 bis 4, **dadurch gekennzeichnet,**
**dass** es sich bei den zugänglichen Konfigurationszuständen um einen Verbindungsmodus (CONNECTED) und einen Leerlaufmodus (IDLE) handelt.

6. Verfahren nach einem der Ansprüche 1 bis 5, **dadurch gekennzeichnet,**
**dass** der Einrichtung (RNC) zur Funkzugangskontrolle mindestens einer der Parameter von einem mit der Einrichtung (RNC) zur Funkzugangskontrolle verbundenen Kernnetz (CN) oder von einer Einrichtung (OMC) zur Überwachung und Wartung des Funkkommunikationssystems übermittelt wurde.

7. Einrichtung (RNC) zur Funkzugangskontrolle zwischen mindestens einer Basisstation (NODE B) und Teilnehmerstationen (UE1, UE2) über eine Luftschnittstelle in einem Funkkommunikationssystem,
wobei Nutzinformationen (MULTICAST INFO) als Dienst einer Gruppe von Teilnehmerstationen (UE1, UE2) über Funk zur Verfügung gestellt werden,
wobei für mindestens eine Teilnehmerstation (UE1, UE2) der Gruppe mindestens zwei verschiedene Konfigurationszustände (IDLE, CONNECTED) zugänglich sind, **dadurch gekennzeichnet,**
**dass** die Einrichtung (RNC) zur Funkzugangskontrolle Mittel zur Entscheidung aufgrund von einem oder mehreren Parametern über die Art des nach dem Empfang der Nutzinformationen (MULTICAST INFO) von der mindestens einen Teilnehmerstation (UE1, UE2) einzunehmenden Konfigurationszustandes (IDLE, CONNECTED) aufweist.
